# EUROPEAN PATENT APPLICATION

(11) **EP 2 380 446 A1**
(43) Date of publication of application: **26.10.2011**
(21) Application number: 11161260.2
(22) Date of filing: 06.04.2011
(51) Int. Cl.: A23C 9/123, A23C 9/13, A23L 1/30

(54) **Use of manganese for stimulation of growth of bifidobacteria**

(30) Priority: 22.04.2010 EP 10160698
(71) Applicant: Chr. Hansen A/S, 2970 Hoersholm (DK)
(72) Inventor: Garrigues, Christel, 1963, Frederiksberg C (DK); Pedersen, Martin Bastian, 2300, Copenhagen S (DK)

(57) **Abstract**

The present invention relates to use of manganese for the improvement of the growth of *Bifidobacterium animalis* subsp. *lactis* strain CHCC5445 (BB-12®) with accession number DSM15954 and a method for production of a fermented milk product with a high probiotic value by inoculation of milk with BB-12® and a growth promoting amount of a source of manganese.

## Description

### FIELD OF INVENTION

The present invention relates to the use of manganese (Mn) as a growth stimulant for a strain of *Bifidobacterium animalis* subsp. *lactis.*

### BACKGROUND OF INVENTION

Dairy products, and specifically yoghurt-like products which use a symbiotic fermentation of *Streptococcus thermophilus* and *Lactobacillus bulgaricus,* form the largest segment by far of the market of probiotic products. Dairy products are excellent for delivering useful probiotic bacteria such as Bifidobacteria and introducing them into the gastrointestinal tract. In fermented dairy products there is a demand for high levels of the probiotic strains in order for the products to have the desired probiotic efficacy. Hence there is a market need for compounds which can stimulate the growth of probiotic strains in milk and other fermentable food/feed products and for safe and effective methods for production of fermented products with a high probiotic value. Particularly, compounds which can stimulate the growth of probiotic strains without exerting a negative or deleterious effect on the health-giving nor the organoleptic qualities of the fermented products are desirable.

The *Bifidobacterium animalis* subsp. *lactis* strain CHCC5445 (BB-12®) is a well known probiotic bacterium, obtainable from Chr. Hansen A/S, Hoersholm, Denmark. Clinical evidence indicates that a dose of 10⁷ to 10⁸ CFU (colony forming units) per ml fermented milk product is required for probiotic efficacy.

BB-12® as single strain grows poorly in fresh milk. A primary nutritional limitation has been identified as the nitrogen source. Strains belonging to *Bifidobacterium animalis* subsp. *lactis* have no extra-cellular proteinase activity (Janer et al., 2005, Applied and Environmental Microbiology, 71:8460). Additionally, we have not identified any genes in the BB-12® genome encoding cell envelope-associated proteinases. As a result, BB-12® is unable to hydrolyze complex protein sources like casein and the growth of the strain in milk is dependent of the presence of an extra-cellular source of peptides, or amino acids that can be readily internalized and used for synthesis of biomass. These can be supplied either through the addition of peptides (US 2008/0181986), the addition of proteases, or through a combination with at least one strain of bacteria, e.g. *Streptococcus thermorphilus* and/or *Lactobacillus bulgaricus,* with proteolytic activity capable of generating peptides from the milk casein (WO2008/148561; WO2010/023290).

Additionally, it has been found that the addition of L-cysteine base (WO2008/006949) or a sulphur-containing amino acid (US2008/0181986) can boost the growth of strains of *Bifidobacterium animalis* subsp. *lactis.*

The present invention proposes an alternative method of stimulating the growth of *Bifidobacterium animalis* subsp. *lactis* strain CHCC5445 (BB-12®) in fermented milk with manganese. Notably, the present invention proposes a safe, simple and efficient method of production of a fermented milk product, such as a yoghurt, with a high probiotic value by inoculating milk with *Bifidobacterium animalis* subsp. *lactis* strain CHCC5445 (BB-12®) and a source of manganese which can be exploited by BB-12®.

Additionally the present invention proposes a suitable method for promoting the growth of BB-12® in a fermented milk product, such as yoghurt, which in addition to the probiotic BB-12® requires the presence of other lactic acid bacteria.

A second aspect of the invention relates to a fermented milk product obtainable by the method according to the present invention.

Furthermore, the invention relates to an inoculum for inoculation of a suitable substrate, such as milk, to transform the substrate into a fermented food or feed product comprising BB-12® and a source of manganese, optionally together with other lactic acid bacteria strains, such as strains of *Streptococcus thermophilus* and *Lactobacillus bulgaricus.*

### SUMMARY OF THE INVENTION

In order to obtain a high CFU/ml of BB-12® in fermented milk products for desired probiotic efficacy, the inventors of the present invention have been working on identifying compounds which can improve the proliferation of BB-12®.

The present invention is based on the surprising finding that the addition of manganese to milk with *Bifidobacterium animalis* subsp. *lactis* strain CHCC5445 (BB-12®) improves the growth of the bacteria several-fold over BB-12® maintained in milk absent of added manganese.

The method of the present invention is particularly useful for obtaining a fermented milk product, such as a yoghurt, which contains at least 10⁸ CFU of BB-12® per ml fermented milk product after fermentation and/or at least 10⁸ CFU BB-12® per ml fermented milk product after at least 28 days storage at +6°C since it is possible to maintain very high levels of BB-12® during storage of the product in refrigerated surroundings, and since the manganese stimulant is present in doses such that neither the texture and structure, nor the organoleptic qualities of the fermented milk product are negatively affected.

Accordingly, an aspect of the invention relates to a method for the preparation of a fermented milk product, such as a product comprising at least 10⁸ CFU BB-12® per ml fermented milk product, wherein the method comprises:
i) inoculating milk with
   a) *Bifidobacterium animalis* subsp. *lactis* strain CHCC5445 (BB-12®) with accession number DSM15954, a mutant thereof, or a variant thereof; and
   b) an amount of a source of manganese sufficient to promote the growth of BB-12®; and
ii) fermenting the milk under suitable conditions;
iii) optionally adding further microorganisms and/or additives to said fermented milk; and
iv) optionally packaging the fermented milk product in a suitable package.

An interesting embodiment relates to a method for preparation of a fermented milk product comprising at least 10⁸ CFU Bifidobacteria per ml fermented milk product wherein the method comprises:
i) inoculating milk with:
   a) *Bifidobacterium animalis* subsp. *lactis* strain CHCC5445 (BB-12®) with accession number DSM15954, a mutant thereof, or a variant thereof;
   b) an amount of a source of manganese sufficient to promote the growth of BB-12®;
   c) at least one *Lactobacillus bulgaricus* strain; and
   d) at least one *Streptococcus thermophilus* strain;
ii) fermenting the milk under conditions suitable for obtaining a fermented milk product with at least 10⁸ CFU Bifidobacteria per ml fermented milk;
iii) optionally adding further microorganisms and/or additives to said fermented milk; and
iv) optionally packaging the fermented milk product in a suitable package.

The invention also relates to an inoculum for inoculation of a substrate, such as a milk, to transform the substrate to a fermented food or feed product comprising, as a mixture or in the form of a kit of parts:
a) *Bifidobacterium animalis* subsp. *lactis* strain CHCC5445 (BB-12®) with accession number DSM15954, a mutant thereof or a variant thereof; and
b) a source of manganese.

### BRIEF DESCRIPTION OF THE FIGURES

Fig. 1. Acidification of UB-milk with BB-12®. The initial drop in pH over the first 30 minutes for all cultures is an artifact caused by the heating of the milk from ca. 4°C to 37°C.
Fig. 2: Effect of manganese on BB-12® growth illustrated by acidification in UB-milk with 0.05% Cys-HCI at 37°C. Added manganese is calculated as ppm of MnCl₂·H₂O.
Fig. 3: Dose response of manganese on BB-12® growth illustrated by acidification in UB-milk with 0.05% CysHCI with 0.1% peptide at 37°C. Added manganese is calculated as ppm of MnCl₂·H₂O.
Fig. 4: Effect of the addition of manganese (MnCl₂·H₂O) on BB-12® growth illustrated by acidification in fresh milk with 0.05% CysHCl at 37°C.
Fig. 5: Effect of the addition of manganese (MnSO₄·H₂O, 1 ppm) on *Streptococcus thermophilus* ST7018 and *Lactobacillus bulgaricus* LBCH2 at 40°C.

### DETAILED DISCLOSURE

### Definitions

In the present context, the term "milk" comprises milk of a mammal or a plant. Examples of milk are cow's milk (bovine milk), camel milk, buffalo milk, goat's milk, sheep's milk, and soy milk. Optionally the milk is acidified, e.g. by addition of an acid (such as citric, acetic or lactic acid), or mixed, e.g. with water. The milk may be raw or processed, e.g. by filtering, sterilizing, pasteurizing, homogenizing etc, or it may be reconstituted dried milk. An important example of "bovine milk" according to the present invention is pasteurized cow's milk. It is understood that the milk may be acidified, mixed or processed before, during and/or after the inoculation with bacteria.

The term "fermented milk product" refers to products which are intended for animal, more specifically human, consumption and which are derived from acidifying lactic fermentation by a lactic acid bacterium or by Bifidobacterium, or a combination of such strains, of a milk substrate. Such products may contain secondary ingredients such as fruits, vegetables, sugars, flavours, etc.

The term "fermented food or feed product" refers to products which are intended for human or animal consumption, respectively, and which are derived from acidifying lactic fermentation by a lactic acid bacterium or by Bifidobacterium, or a combination of such strains, of a suitable substrate, such as, for example milk, fruit juices, wine, beer, and soy sauce. Such products may contain secondary ingredients such as fruits, vegetables, sugars, flavors, etc.

By "fermentation" is meant a biochemical reaction which involves releasing energy from an organic substrate by the action of microorganisms. In particular "lactic fermentation" is an anaerobic or microaerobic process of the consumption of a.o. lactose by the bacteria in the ferments, which causes the formation of lactic acid, and potentially acetic acid, and a lowering of the pH.
In the present context, a yoghurt starter culture is a bacterial culture which comprises at least one *Lactobacillus bulgaricus* strain and at least one *Streptococcus thermophilus* strain. In accordance herewith, a "yoghurt" refers to a fermented milk product obtainable by inoculating and fermenting milk with a *Lactobacillus bulgaricus* strain and a *Streptococcus thermophilus* strain.

In the present context, the term "packaging" (a suitable amount of) the fermented milk in a suitable package relates to the final packaging of the fermented milk to obtain a product that can be ingested by e.g. a person or a group of persons. A suitable package may thus be a bottle or similar, and a suitable amount may be e.g. 10 ml to 5000 ml, but it is presently preferred that the amount in a package is from 50 ml to 1000 ml.

In the present context, the term "mutant" should be understood as a strain derived from a strain of the invention (or used in the invention) by means of e.g. genetic engineering, radiation and/or chemical treatment. It is preferred that the mutant is a functionally equivalent mutant. A preferred mutant of a strain of the invention is a mutant that enhances the growth of a Bifidobacterium cell in a milk medium, e.g. a mutant that has substantially the same, or improved, Bifidobacterium growth promoting properties as the mother strain. Such a mutant is a part of the present invention. Especially, the term "mutant" refers to a strain obtained by subjecting a strain (such is a strain of the invention) to any conventionally used mutagenization treatment including treatment with a chemical mutagen such as ethane methane sulphonate (EMS) or N-methyl-N'-nitro-N-nitroguanidine (NTG), UV light or to a spontaneously occurring mutant. A mutant may have been subjected to several mutagenization treatments (a single treatment should be understood one mutagenisation step followed by a screening/selection step), but it is presently preferred that no more than 20, or no more than 10, or no more than 5, treatments are carried out. In a presently preferred mutant, less that 5%, or less than 1%, or less than 0.5%, or less than 0.1%, or even less than 0.01 % of the nucleotides in the bacterial genome have been shifted with another nucleotide, or deleted, compared to the mother strain.

In the present context, the term "variant" should be understood as a strain which is functionally equivalent to the mother strain, such as a strain that enhances the growth of a Bifidobacterium cell in a milk medium. Such variants, which may be identified using appropriate screening techniques, are a part of the present invention.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising", "having", "including" and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

### Implementation and aspects of the invention

*Bifidobacterium animalis* subsp. *lactis* strain CHCC5445 (BB-12®) as a strain grows slowly in fresh milk. The primary nutritional limitation has been identified as the nitrogen source. As is described in the art, nitrogen can be supplied either through addition of peptides, through the addition of proteases, or through combination of BB-12® with other lactic acid bacteria strain(s) with proteolytic activity capable of generating peptides from the milk casein.

For the production of fermented milk products with a high probiotic value it is desirable to find ways of further improving the growth of BB-12® in the milk.

Manganese (Mn) is a mineral element that is nutritionally essential. Mn plays an important role in a number of physiological processes and as a constituent in some enzymes and an activator of other enzymes (Nielsen FH. In: Shils M, Olson JA, Shike M, Ross AC, eds. Modern Nutrition in Health and Disease. 9th ed. Baltimore: Williams & Wilkins; 1999:283-303).

Both milk and synthetic substrates conventionally used for culture of BB-12® contain trace amounts of Mn. Milk from cows contain on average 0.05-0.2 ppm (0.05-0.2 µg/ml) of manganese (Handbook of milk composition, Robery G. Jensen, Academic Press, 1995).

However, the inventors of the present invention have found that the inoculation of milk with additional Mn in the presence of peptides leads to an improvement of the growth of *Bifidobacterium animalis* subsp. *lactis* strain CHCC5445 (BB-12®) to CFU levels many-fold higher than when peptides and BB-12® without added Mn are used to inoculate milk.

Accordingly, the present invention in one aspect relates to a method for promoting the growth of *Bifidobacterium animalis* subsp. *lactis* strain CHCC5445 (BB-12®) comprising:
i) inoculating a growth substrate with:
   a) *Bifidobacterium animalis* subsp. *lactis* strain CHCC5445 (BB-12®), a mutant thereof, or a variant thereof; and
   b) a growth promoting amount of a source of manganese; and
ii) maintaining said inoculated growth substrate under conditions which are favorable for the metabolism of BB-12®.

Measuring the viable Bifidobacteria cell count is done by quantifying the number of colony forming units (CFU) in serial dilutions of the fermented product by colony counting on agar plates, according to standard methods in the art. Suitable medium and incubation conditions are as given in Example 1 below.

Another aspect of the present invention relates to a method for the preparation of a fermented milk product, which comprises:
i) inoculating milk with:
   a) *Bifidobacterium animalis* subsp. *lactis* strain CHCC5445 (BB-12®), a mutant thereof, or a variant thereof;
   b) a growth promoting amount of a source of manganese; and
   c) a growth promoting amount of a source of amino acids and/or at least one other strain of lactic acid bacteria;
ii) fermenting the milk under favorable conditions;
iii) optionally adding further microorganisms and/or additives to said fermented milk; and
iii) optionally packaging the fermented milk product.

Un-enriched fresh milk, such as cow's milk or goat's milk, contains few simple protein sources which can be readily taken up and internalized by BB-12®. When using milk substrates with protein compositions that limit the growth and/or metabolism of BB-12®, the growth of BB-12® can be reconstituted and/or improved by the addition of an extra-cellular source of peptides or amino acids, or by the presence of other strains of bacteria with proteolytic activity.

Thus, a preferred embodiment of the present invention relates to a method for the preparation of a fermented milk product, which comprises:
i) inoculating milk with:
   a) *Bifidobacterium animalis* subsp. *lactis* strain CHCC5445 (BB-12®), a mutant thereof, or a variant thereof;
   b) a growth promoting amount of a source of manganese; and
   c) a growth promoting amount of a source of amino acids and/or at least one other strain of lactic acid bacteria;
ii) fermenting the milk under favorable conditions;
iii) optionally adding further microorganisms and/or additives to said fermented milk; and
iv) optionally packaging the fermented milk product.

As is known to the skilled person various fermented milk products can be obtained by fermentation of milk with different lactic acid bacteria. In a preferred embodiment the fermented milk product is a product selected from the group consisting of yoghurt, drinking yoghurt, stirred yoghurt, set yoghurt and a yoghurt-like drink, bitter milk, butter milk, sour cream, fresh cheese and cheese.

Generally speaking, the skilled person knows suitable fermenting conditions to ferment milk with the herein relevant bacteria. Herein suitable conditions include where the milk is inoculated with the bacteria and fermented at 38°C to 43°C with the optimum at 40°C, until reaching a pH of 4.4 to 4.6 (roughly after around 8 hours). Cooling the milk to +6°C stops the fermentation and growth of herein relevant bacteria, such as Bifidobacteria.

In a preferred embodiment the herein described improved growth is obtained by inoculating from 1x10⁵ to 2x10⁹ CFU of BB-12® per ml of milk substrate.

If desired, one may add extra bacteria (e.g. extra Bifidobacterium) at some point of interest (e.g. after completion of the fermentation).

According to an embodiment of the present invention, the fermented milk product is conveniently packaged in a sealed package that contains from 10-5000 ml of the product, such as from 25 to 3000 ml or from 50 to 1000 ml. Exemplary packages may contain 10-300 ml, 20-200 ml or 30-100 ml.

Fermented milk comprising at least 10⁸ CFU/ml BB-12® as described herein can also be used as a product additive to e.g. be put into other edible food products, such as curd cheeses, chocolates, juices, meat products and dried milk powder products for young infants (infant formulas).

The source of manganese may be any food grade source of manganese that can be readily exploited by the Bifidobacteria and includes but is not limited to manganese salts, solutions with dissolved manganese ions, and Mn-containing natural material. Examples of natural material containing large amounts of Mn include plants, such as teas, seaweed, vegetables, herbs, etc.

In a preferred embodiment of the present invention the stimulatory manganese is added to the growth medium, such as milk, as a manganese salt. Such manganese salts include but is not limited to manganese chloride (MnC1₂), manganese sulphate (MnS0₄), manganese citrate, manganese glycerophosphate, manganese oxide, and manganese gluconate as well as various non-toxic manganese salts of acids which are at least slightly soluble in water.

In a specially preferred embodiment of the present invention the source of manganese is selected from the group consisting of MnCl₂ and MnSO₄.

In a preferred embodiment of the present invention the manganese salt is used in an amount based upon the weight of the milk sufficient to promote growth of BB-12® and ranges from about 0.1 ppm to about 10 ppm, more preferably from about 0.3 ppm to about 1 ppm.

The inventors of the present invention have found that the growth of strains of *Streptococcus thermophilus* and *Lactobacillus bulgaricus* are not affected positively, nor negatively, 1.0 ppm of manganese salt (Example 5). Additionally, the CFU level of BB-12® is increased in mixed cultures such as the commercial cultures ABY-1 and ABY-10 from Chr. Hansen, Hoersholm, Denmark (Example 6). Consequently, the present invention proposes a suitable method for the preparation of a fermented milk product, such as yoghurt, which in addition to BB-12® requires the use of other lactic acid bacteria.

It should be understood that the milk may be inoculated separately/sequentially with each bacterial species, or simultaneously with two or more bacterial species. It is presently preferred that the milk is inoculated with all bacterial species at the same time. This is conveniently done by inoculating the milk with a starter culture comprising the bacterial species.

According to a preferred embodiment the at least one strain of bacteria is one or more bacteria of the genus Lactococcus, Lactobacillus, Leuconostoc and Streptococcus.

In a specially preferred embodiment of the present invention, said at least one other strain of lactic acid bacteria comprises at least one strain of *Streptococcus thermophilus* and at least one strain of *Lactobacillus bulgaricus.*

In the present context the at least one strain of *Streptococcus thermophilus* and the at least one strain of *Lactobacillus bulgaricus* may be any suitable (e.g. commercially available) *Streptococcus thermophilus* and *Lactobacillus bulgaricus* strain. As known to the skilled person, the strains may be inoculated in adequate amounts to obtain an adequate amount of *Streptococcus thermophilus* and *Lactobacillus bulgaricus* in the final fermented milk product.

In a preferred embodiment the milk is inoculated with from 10⁴ to 10⁷ CFU of the at least one strain of *Streptococcus thermophilus* and with from 10⁴ to 10⁷ CFU of the at least one strain of *Lactobacillus bulgaricus* per ml of milk substrate.

The source of amino acids may be any source of amino acids and/or peptides which can be readily exploited by the BB-12® bacteria. The source of amino acids may be a single amino acid or a mixture of various amino acids. Protein hydrolysates from vegetable or animal sources may also be employed. Vegetable protein hydrolysates may be obtained from, for example, wheat gluten, wheat germ, corn gluten, soy protein, linseed protein, potato protein, peanut press cake, yeast and the like.

In a preferred embodiment the amount of amino acids and/or peptides used are in a range of from about 0.001 g/L to about 50 g/L, such as from about 0.01 g/L to about 10 g/L, such as from about 1 g/L to about 5 g/L based on the total weight of milk substrate.

In a preferred embodiment of the present invention step i) further comprises inoculating the milk with cysteine. Exemplary forms of cysteine include but are not limited to L-cysteine and cysteineHCl, and cysteine-containing compounds such as glutathione. Preferably, the cysteine is used at a concentration of between 0.01 to 2 g/L, such as from about 0.1 g/L to about 1 g/L cysteine.

In a second aspect, the present invention relates to a fermented milk product obtainable by a method to the present invention, especially, a fermented milk product which contains at least 10⁸ CFU/ml *Bifidobacterium animalis* subsp. *lactis* strain CHCC5445 (BB-12®), a mutant thereof, or a variant thereof, at the end of fermentation and/or after 28 days of storage at +6° C.

The preservation or storage period of the fermented product is the period which immediately follows the end of the process of preparation of the fermented product and its packaging.

Accordingly, in a preferred embodiment, the fermented milk product has at least 10⁸ CFU/ml Bifidobacteria after 1 day of storage at +6°C, more preferred at least 10⁸ CFU/ml Bifidobacteria after 7 days of storage at +6°C, even more preferred at least 10⁸ CFU/ml Bifidobacteria after 14 days of storage at +6°C, even more preferred at least 10⁸ CFU/ml Bifidobacteria after 21 days of storage at +6°C and most preferred at least 10⁸ CFU/ml Bifidobacteria after 28 days of storage at +6°C.

In a preferred embodiment the fermented milk product is a product selected from the group consisting of yoghurt, drinking yoghurt, stirred yoghurt, set yoghurt and a yoghurt-like drink, bitter milk, butter milk, acidophilus milk, sour cream, fresh cheese and cheese. In a much preferred embodiment the fermented milk product is yoghurt, i.e. when the milk is inoculated and fermented with both a *Lactobacillus bulgaricus* strain and a *Streptococcus thermophilus* strain.

In a further aspect, the invention relates to an inoculum for inoculation of milk or any other suitable substrate to transform the milk or the any other suitable substrate to a fermented food or feed product comprising, as a mixture or in the form of a kit of parts:
a) *Bifidobacterium animalis* subsp. *lactis* strain CHCC5445 (BB-12®), a mutant thereof, or a variant thereof;
b) a source of manganese which can be readily exploited by BB-12®.

In a preferred embodiment the inoculum comprises from 10⁵ to 10¹² CFU/g BB-12®.

The milk or any other suitable substrate used in the present invention may contain a protein composition that is limiting to the growth and/or metabolism of BB-12®. Hence, a preferred embodiment of the present invention comprises an inoculum for inoculation of a suitable substrate, such as milk, to transform the substrate to a fermented food or feed product comprising, as a mixture or in the form of a kit of parts:
c) *Bifidobacterium animalis* subsp. *lactis* strain CHCC5445 (BB-12®), a mutant thereof, or a variant thereof;
d) a source of manganese which can be readily exploited by BB-12®; and
e) a source of amino acids which can be readily exploited by BB-12® and/or at least one other strain of lactic acid bacteria.

According to a preferred embodiment the at least one other strain of lactic acid bacteria is one or more bacteria strain of the genus Lactococcus, Lactobacillus, Leuconostoc and Streptococcus.

In a preferred embodiment of the present invention the at least one strain of bacteria comprises at least one strain of *Streptococcus thermophilus* and at least one strain of *Lactobacillus Bulgaricus.* Preferably, the inoculum contains from 10⁵ to 10¹² CFU/g of said at least one strain of *Streptococcus thermophilus* and from 10⁵ to 10¹² CFU/g of said at least one strain of *Lactobacillus bulgaricus.*

The inoculum may be in liquid form, dry form, spray-dried, frozen or in the form of a lyophilisate. According to a preferred embodiment the micro-organisms are in the form of at least one lyophilisate.

The constituents of the inoculum may be mixed together to produce at least one physical entity (entities), such as, for example, a tube or a carton, which comprises both BB-12®, manganese and/or the at least one other lactic acid bacteria strain and/or the source of amino acids in the same physical entity, without negatively affecting the growth of BB-12®. Alternatively, the constituents of the inoculum may be separated in two or more physical entities as a kit of parts and inoculated separately/sequentially with each constituent, or two or more constituents may be inoculated simultaneously.

The inoculum is particularly suitable for direct inoculation. However, the inoculum may be readily re-dissolved in a proportion of H₂O and/or a suitable substrate, such as milk, for example, for the preparation of a starter culture.

In preferred embodiments of the present invention the inoculum is in the form of a ready-to-use mixture or kit of parts for fast and easy inoculation of the milk or the any other suitable substrate by separate/sequential and/or simultaneous addition of the entire content of the constituents of the inoculum to a predefined volume of substrate, such as milk. In such cases, the inoculum preferably adds to the substrate BB-12®, the mutant thereof, or the variant thereof, in a quantity (final concentration) of from 1x10⁵ to 2x10⁹ CFU of BB-12®, the mutant thereof, or the variant thereof, per ml of substrate, such as milk.

In the same line, the inoculum in preferred embodiments of the abovementioned invention further adds to the substrate, such as milk, at least one strain of *Streptococcus thermophilus* and at least one strain of *Lactobacillus bulgaricus* in quantities of from 1x10⁴ to 1x10⁷ CFU of the at least one strain of *Streptococcus thermophilus* per ml of substrate and from 1x10⁴ to 1x10⁷ CFU of the at least one strain of *Lactobacillus bulgaricus* per ml of substrate.

The source of manganese may be any food grade source of manganese that can be readily exploited by the Bifidobacteria and include but is not limited to manganese salts and Mn-containing natural material. Examples of natural material containing large amounts of Mn include plants, such as teas, seaweed, vegetables, herbs, etc.

In a preferred embodiment of the present invention the stimulatory manganese is a manganese salt. Such manganese salts include, but is not limited to, manganese chloride (MnCl₂), manganese sulphate (MnSO₄), manganese citrate, manganese glycerophosphate, manganese oxide, and manganese gluconate as well as various non-toxic manganese salts of acids which are at least slightly soluble in water.

In a specially preferred embodiment of the present invention the source of manganese is selected from the group consisting of MnC1₂ and MnS0₄.

Advantageously, the inoculum adds to the suitable substrate, such as milk, manganese salt in a quantity of from about 0.1 ppm to about 10 ppm of manganese salt to substrate, such as from about 0.3 ppm to about 1 ppm of manganese salt to substrate.

The source of amino acids may be any source of amino acids and/or peptides which can be readily exploited by the BB-12® bacteria. The source of amino acids may be a single amino acid or a mixture of various amino acids. Protein hydrolysates from vegetable or animal sources may also be employed. Vegetable protein hydrolysates, for example, may be obtained from wheat gluten, wheat germ, corn gluten, soy protein, linseed protein, potato protein, peanut press cake, yeast and the like.

Advantageously, the inoculum adds to the suitable substrate, such as milk, free amino acids, peptides and/or protein hydrolysates in a quantity of from about 0.001 gram to 50 gram per liter of substrate, such as from about 0.01 gram to about 10 gram per liter of substrate, such as from about 1 gram to about 5 gram per liter of substrate.

In a preferred embodiment, the inoculum comprises a growth promoting amount of a source of cysteine. Exemplary forms of cysteine include but are not limited to L-cysteine, cysteine-HCI, and cysteine-containing compounds such as glutathione.

Preferably, the inoculum adds to the suitable substrate, such as milk, cysteine in a quantity of between about 0.01 gram to 2 gram of cysteine per liter of substrate, such as from about 0.1 gram to about 1 gram of cysteine per liter of substrate.

In yet a further aspect the present invention relates to the use of manganese as a growth stimulant of *Bifidobacterium animalis* subsp. *lactis* strain CHCC5445 (BB-12®) with accession number DSM15954, a mutant thereof or a variant thereof.

### EXAMPLES

### Example 1. Peptides enhance growth of BB-12® in milk

This example involves studying the growth of BB-12® in milk and the effect of peptide addition.

### Materials and Methods:

Preparation of reconstituted skimmed milk (UB milk): Skimmed milk powder (Arla Foods, Viby, Denmark) was added to water at 9.55% dry matter. Heat treatment: UHT (132°-135°C during 8 seconds) then cooked (98°-102°C during 30-35 minutes).

Milk fermentations were carried out in presence of cysteineHCI (0.05%). Cysteine was supplied by Sigma-Aldrich (Broendby, Denmark), except when indicated. The cysteine stock solution was prepared at 10 g/L, then autoclaved.

Peptide was supplied by Fluka Analytical (reference #83059, Broendby, Denmark). A concentrated solution was prepared at 100 g/L, then autoclaved. The solution was added to UB milk in order to reach a concentration of 0.1% to 0.5%.

Preparation of dilution water: tryptone 15 g/L (Oxoid L42, Greve, Denmark), NaCl 9 g/L (Merck no 106404, Glostrup, Denmark), Antifoam 1510 2% (from a concentrated solution at 20g/L, BDH, Dagenham, U.K.), and 975 g of water.

Cell count determination: A known amount of sample was added to dilution water and decimal dilutions were prepared. Appropriate dilutions were plated on MRS (Oxoid, Greve, Denmark) with 0.05% cysteine HCI (Sigma-Aldrich, Broendby, Denmark) and incubated over-night at 37°C in sealed jars with oxygen removal (AnaeroGen AN0035A/0025A). The result is reported as CFU/ml of original sample volume. In mixed cultures 50 µg/ml of the antibiotic Li-Mupirocin was added in order to selectively enumerate BB-12®.

Strain: frozen cells of BB-12® were used (DVS, product 2836497, Chr. Hansen A/S, Hoersholm, Denmark). The inoculation level was 0.01% (2 g DVS was added to 100 ml dilution water, 1 ml of this solution was added to 200 ml of milk). This corresponds to a measured inoculation level of ca. 1.0x10⁷ CFU/ml of BB-12®. The cell suspension was kept and inoculated at ca. 4°C.

### Results:

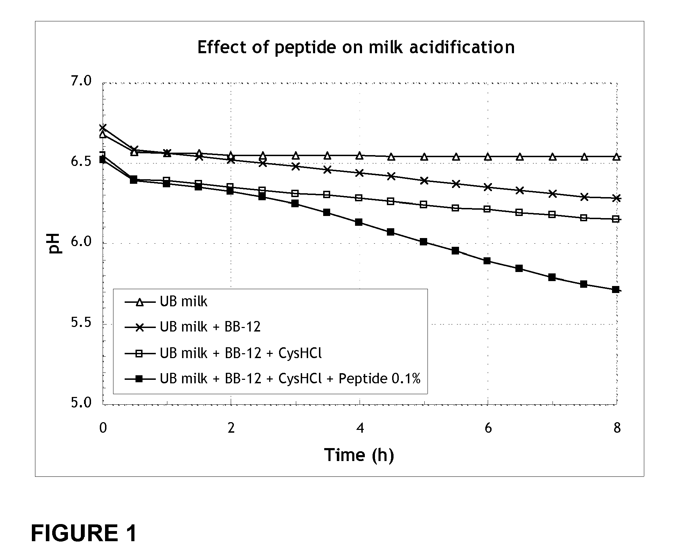

The growth of BB-12® in milk was measured by monitoring milk acidification (fermentation by BB-12® of lactose into lactic acid and acetic acid) over time at 37°C. In UB milk without BB-12® added there was no decrease in pH over time (Fig. 1).

After 8 hours the pH of the UB milk inoculated with BB-12® (and no cysteine) had only decreased marginally. In the culture with cysteine added there was no further improvement in growth (the lower starting pH is caused by the cysteine). There was also no increase in CFU (data not shown).

This is in line with work showing that strains belonging to *Bifidobacterium animalis* subsp. *lactis* have no extra-cellular proteinase activity (Janer et al., 2005, Applied and Environmental Microbiology, 71:8460). Overall, Bifidobacteria are unable to hydrolyze complex protein sources like casein.

For growth of Bifidobacteria in milk you therefore need 1) to add a nitrogen source (e.g. peptides, or amino acids), or 2) peptides generated in the milk by degradation of casein by proteolytic species, e.g. *Streptococcus thermophilus* or *Lactobacillus delbrueckii* subsp. *bulgaricus.*
The addition of 0.1% of peptide resulted in a pH drop to 5.9 after 6 hours, i.e. 0.3 pH units lower than the culture without peptide added (Fig. 1). Six hours is about the time of a fermented milk production.

Overall the addition of peptide to milk promotes BB-12® growth.

### Example 2. Manganese enhances BB-12® growth in milk

We here use ppm (=mg/L) to designate the amount of manganese added.

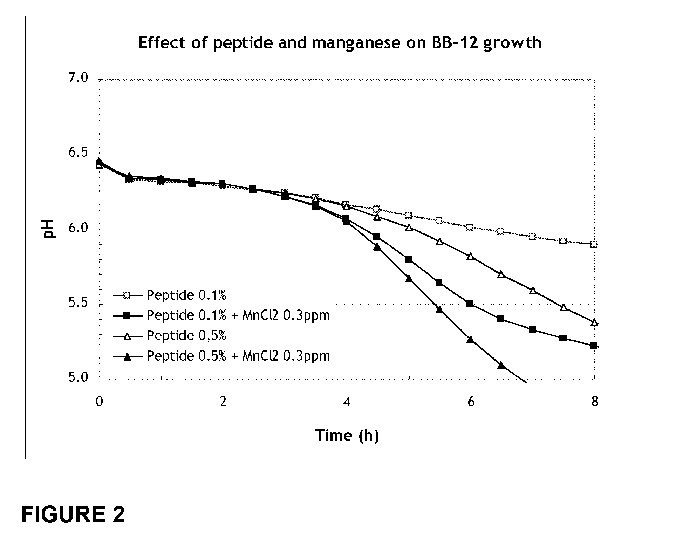

We surprisingly found that manganese (0.3 ppm MnCl₂·H₂O; Reference 529680, Sigma-Aldrich Broendby, Denmark) together with 0.1% of peptide source enhanced the acidification/growth of BB-12® even further than peptide alone (Fig. 2). After 6 hours pH was 5.5 with manganese and only 6.0 without.

For the culture with just 0.1% peptide no increase was observed after 6 hours from the initial 1.0x10⁷ CFU/ml. When manganese had also been added a CFU/ml of 3x10⁸ was however reached after 6 hours, i.e. 30-fold higher than without manganese.

In a separate experiment we tested the effect of 0.5% peptide and manganese (Fig. 2). For the culture with 0.5% peptide a CFU/ml of 2x10⁷ was reached after 6 hours. For the culture with manganese in addition to the peptide a CFU/ml of 3x10⁸ was reached, i.e. 15-fold higher than the culture without manganese.

This type of experiment was repeated with another manganese salt, i.e. MnSO₄·H₂O (Reference 105941, Merck, Albertslund, Denmark). Here the CFU after 6 hours was 5x10⁸ with 0.1% of peptide and 1 ppm of MnSO₄·H₂O. There was no increase in CFU for the culture with just 0.1% peptide.

Overall, this surprisingly shows that manganese enhances the growth/CFU of BB-12® in milk when peptide is available.

### Example 3. Determination of the manganese dose response

This example involves studying manganese dose response.

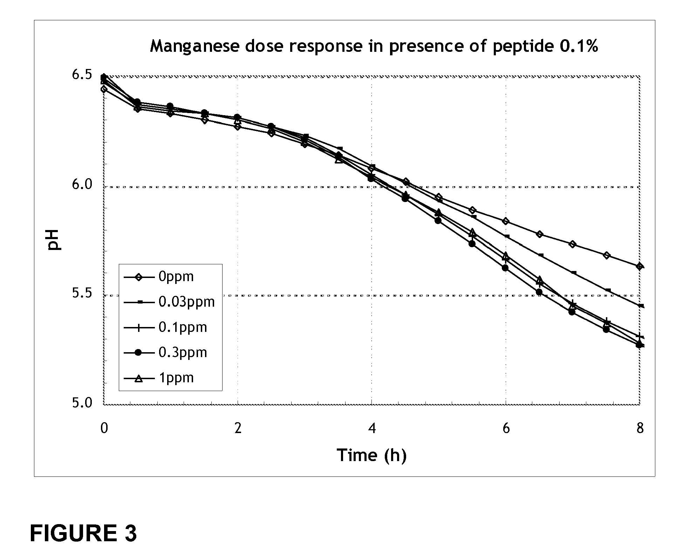

Milk acidification/growth was measured in presence of 4 different manganese concentrations varying from 0 ppm to 1 ppm (0.03, 0.1, 0.3 and 1 ppm). By adding 0.1 to 0.3 ppm of MnCl₂·H₂O the optimum proliferation rate is reached (Fig. 3).

### Example 4. Manganese also enhances BB-12® growth in fresh milk

This example involves studying if the manganese effect was linked to the milk type.

BB-12® growth was assayed in fresh milk. Fresh milk was commercial milk "Arla Express Letmaelk" with 1.5% fat (Arla Foods, Viby, Denmark).

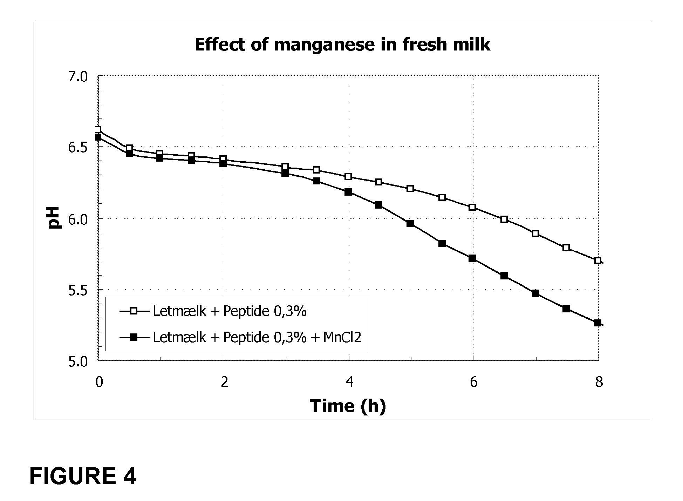

Manganese (MnSO₄·H₂O at 1 ppm) substantially enhanced BB-12® growth also in fresh milk with 0.3% peptide added. Relative to the culture without manganese the pH was 0.4 units lower after 6 hours (Fig. 4).

### Example 5. Manganese does not generally enhance growth

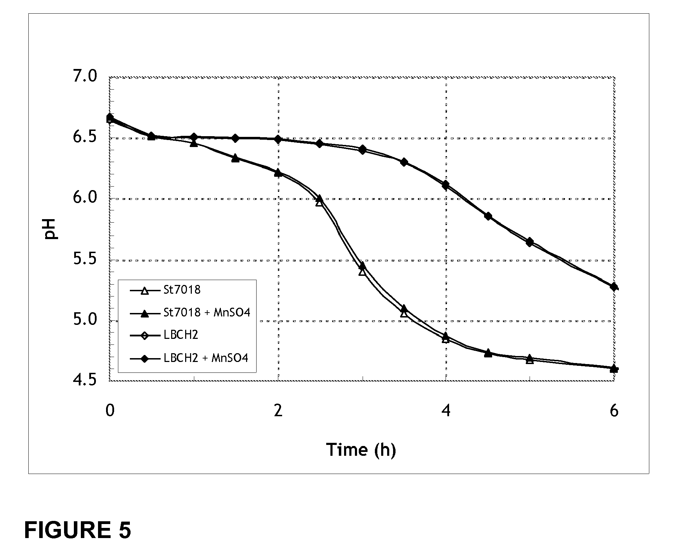

In order to evaluate the effect of manganese on the growth of other species *than B. animalis* subsp. *lactis* strain BB-12®, we measured the acidification profile of strains belonging to two other genera commonly used in fermented milk products: *Streptococcus thermophilus* St7018 and *Lactobacillus delbrueckii* subsp. *bulgaricus* LBCH2 (Fig. 5). Both strains were inoculated at 0.01% of DVS. As can be seen manganese has no effect on acidification. Four other strains of *Streptococcus thermophilus* and one other strain of *Lactobacillus bulgaricus* were also tested. Again, no effect of manganese was observed (data not shown).

Milk from cows contain on average 0.05-0.2 ppm (0.05-0.2 µg/ml) of manganese (Handbook of milk composition, Robery G. Jensen, Academic Press, 1995). As described above *Streptococcus thermophilus* and *Lactobacillus bulgaricus* grow equally well in milk with or without manganese added to the milk. This shows the enhancing effect of manganese is unique to BB-12®.

Note that laboratory growth media for lactic acid bacteria commonly have manganese as an added component at concentrations from e.g. 0.01 ppm MnCl₂ in SA medium, synthetic medium for lactic acid bacteria (Jensen et al. 1993. Minimal requirements for exponential growth of Lactococcus lactis. Appl. Environ. Microbiol. 59:4363-4366) to 6.8 ppm MnSO₄.H₂O in a synthetic medium for Bifidobacteria (Hassinen et al. 1951. The minimal nutritional requirements of Lactobacillus Bifidus. Journal of Bacteriology. 62:771-777).

These media are however based on water, where it is known that an array of minerals is often added to support growth, in addition to other components. As can be seen in Fig. 5 milk is not a substrate that normally requires addition of minerals to support the growth of bacteria. Again, it is therefore surprising that manganese enhances the growth of BB-12® in milk.

### Example 6. CFU of BB-12® is enhanced in mixed cultures with manganese

The effect of manganese (MnSO₄·H₂O, 1 ppm) has been tested on two commercial cultures of Chr. Hansen: ABY-10 and ABY-1 at a concentration of 0.01% of DVS with BB-12®. For the culture ABY-10 the CFU of BB-12® after 6 hours was 4x10⁷ CFU/ml, whereas it was 9x10⁷ CFU/ml in the presence of manganese, i.e. 2-fold higher. Similarly with the culture ABY-1® the CFU/ml of BB-12 was 1x10⁷ and 4x10⁷, respectively, i.e. 4-fold higher with manganese. This result has been repeated and confirmed (data not shown).

The reason why the enhancing effect of manganese on BB-12® in mixed cultures (Example 6) is less than for BB-12® as single culture (Example 2) is because of the general growth competition from the *Streptococcus thermophilus* and *Lactobacillus bulgaricus.*

### Example 7. Detection of manganese

Manganese can be detected by atomic absorption spectrophotometry. The detection level is 60 ng/ml, i.e. 0.060 ppm (Kirk et al., 1988. J. Agric. Food Chem. 36:1211-1216). Other methods for measurement of the amount of Mn in a substrate are known to a person skilled in the art.

### REFERENCES

Janer et al., 2005, Applied and Environmental Microbiology, 71:8460.
US 2008/0181986: Terragno et al.
WO 2008/148561: Chr. Hansen A/S
WO 2010/023290: Chr. Hansen A/S
WO 2008/006949: Compagnie Gervais Danone

## Claims

1. A method for preparation of a fermented milk product, comprising:
i) inoculating milk with:
a) *Bifidobacterium animalis* subsp. *lactis* strain CHCC5445 (BB-12®) with accession number DSM15954, a mutant thereof, or a variant thereof;
b) a growth promoting amount of a source of manganese; and
ii) fermenting the milk;
iii) optionally adding further microorganisms and/or additives to said fermented milk; and
iv) optionally packaging the fermented milk product.

2. The method according to claim 1, wherein the milk is inoculated with from 1x10⁵ to 2x10⁹ CFU/ml of said *Bifidobacterium animalis* subsp. *lactis* strain, a mutant thereof, or a variant thereof.

3. The method according to any of the preceding claims, wherein said source of manganese is a manganese salt.

4. The method according to claim 3, wherein said manganese salt is selected from the group consisting of: MnCl₂ and MnSO₄.

5. The method according to any of claims 3 and 4, wherein the milk is inoculated with from about 0.1 ppm to about 10 ppm of manganese salt, such as from about 0.3 ppm to about 1 ppm of manganese salt.

6. The method according to any of the preceding claims, wherein step i) further comprises inoculating the milk with a growth promoting amount of a source of amino acids and/or at least one other strain of lactic acid bacteria.

7. The method according to claim 6, wherein said at least one other strain of lactic acid bacteria comprises at least one strain of *Streptococcus thermophilus* and at least one strain of *Lactobacillus bulgaricus.*

8. The method according to claim 7, wherein the milk is inoculated with from 1x10⁴ to 1x10⁷ CFU/ml of said at least one strain of *Streptococcus thermophilus* and with from 1x10⁴ to 1x10⁷ CFU/ml of said at least one strain of *Lactobacillus bulgaricus.*

9. The method according to claim 6, wherein said source of amino acids is free amino acids, peptides and/or protein hydrolysates.

10. The method according to claim 9, wherein said free amino acids, peptides and/or protein hydrolysates are used in an amount of from 0.001 g/L to 50 g/L, such as from about 0.01 g/L to about 10 g/L, such as from about 1 g/L to about 5 g/L.

11. The method according to any of the preceding claims, wherein step i) further comprises inoculating the milk with a growth promoting amount of cysteine.

12. The method according to claim 11, wherein said cysteine is used in an amount of from about 0.01 g/L to about 2 g/L, such as from about 0.1 g/L to about 1 g/L.

13. The method according to any of the preceding claims, wherein said fermented milk product is packaged in a sealed package that contains from 10 ml to 5000 ml, from 25 ml to 3000 ml, or from 50 ml to 1000 ml of the product.

14. A fermented milk product obtainable by the method according to any of the preceding claims.

15. The fermented milk product according to claim 14, wherein said fermented milk product contains at least 10⁸ CFU/ml *Bifidobacterium animalis* subsp. *lactis* strain CHCC5445 (BB-12®) with accession number DSM15954, a mutant thereof, or a variant thereof, after at least 28 days of storage at +6° C.

16. The fermented milk product according to any of claims 14 or 15, wherein said fermented milk product is a yoghurt.

17. An inoculum for the inoculation of a suitable substrate, such as milk, to transform the substrate, such as the milk, into a fermented food or feed product comprising, as a mixture or in the form of a kit of parts:
a) *Bifidobacterium animalis* subsp. *lactis* strain CHCC5445 (BB-12®) with accession number DSM15954, a mutant thereof, or a variant thereof;
b) a source of manganese; and

18. The inoculum according to claim 17, comprising from 10⁵ to 10¹² CFU/g of said *Bifidobacterium animalis* subsp. *lactis* strain, said mutant thereof, or said variant thereof.

19. The inoculum according to any of claims 17 to 18, wherein said inoculum adds to the substrate said *Bifidobacterium animalis* subsp. *lactis* strain, said mutant thereof, or said variant thereof, in a quantity of from 1x10⁵ to 2x10⁹ CFU of said *Bifidobacterium animalis* subsp. *lactis* strain, said mutant thereof, or said variant thereof, per ml of substrate.

20. The inoculum according to any of claims 17 to 19, wherein said source of manganese is a manganese salt.

21. The inoculum according to claim 20, wherein said manganese salt is selected from the group consisting of: MnCl₂ and MnSO₄.

22. The inoculum according to any of claims 20 and 21, wherein said inoculum adds to the substrate manganese salt in a quantity of from about 0.1 ppm to about 10 ppm of manganese salt to substrate, such as from about 0.3 ppm to about 1 ppm of manganese salt to substrate.

23. The inoculum according to any of claims 17 to 22, further comprising a source of amino acids and/or at least one other strain of lactic acid bacteria.

24. The inoculum according to claim 23, wherein said source of amino acids is free amino acids, peptides and/or protein hydrolysates.

25. The inoculum according to claim 23, wherein said at least one other strain of lactic acid bacteria comprises at least one strain of *Streptococcus thermophilus* and at least one strain of *Lactobacillus bulgaricus.*

26. The inoculum according to claim 25, comprising from 10⁵ to 10¹² CFU/g of said at least one strain of *Streptococcus thermophilus* and from 10⁵ to 10¹² CFU/g of said at least one strain of *Lactobacillus bulgaricus.*

27. The inoculum according to any of claims 25 and 26, wherein said inoculum adds to the substrate said at least one strain of *Streptococcus thermophilus* and said at least one strain of *Lactobacillus bulgaricus* in quantities of from 1x10⁴ to 1x10⁷ CFU of said at least one strain of *Streptococcus thermophilus* per ml of substrate and with from 1x10⁴ to 1x10⁷ CFU of said at least one strain of *Lactobacillus bulgaricus* per ml of substrate.

28. The inoculum according to any of claims 17 to 27, wherein the bacteria are contained in the form of at least one lyophilisate.

29. The inoculum according to any of claims 17 to 28, further comprising a growth promoting amount of cysteine.

30. Use of manganese as a growth stimulant of *Bifidobacterium animalis* subsp. *lactis* strain CHCC5445 (BB-12®) with accession number DSM15954, a mutant thereof or a variant thereof.
